(19) Europäisches Patentamt
European Patent Office
Office européen des brevets

(11) **EP 3 868 824 B1**

(12) **EUROPEAN PATENT SPECIFICATION**

(45) Date of publication and mention
of the grant of the patent:
**06.12.2023 Bulletin 2023/49**

(21) Application number: **21168883.3**

(22) Date of filing: **17.12.2015**

(51) International Patent Classification (IPC):
**C08L 23/10** (2006.01)      **C08K 5/00** (2006.01)
**C08K 5/14** (2006.01)      **C08L 23/12** (2006.01)
**C08L 23/16** (2006.01)

(52) Cooperative Patent Classification (CPC):
(C-Sets available)
**C08L 23/12; C08K 5/0025; C08K 5/14;**
**C08L 23/16;** C08L 2207/02; C08L 2312/00   (Cont.)

(54) **HETEROPHASIC PROPYLENE COPOLYMER**

HETEROPHASISCHES PROPYLENCOPOLYMER

COPOLYMÈRE HÉTÉROPHASIQUE DE PROPYLÈNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.12.2014 EP 14199422**

(43) Date of publication of application:
**25.08.2021 Bulletin 2021/34**

(62) Document number(s) of the earlier application(s) in accordance with Art. 76 EPC:
**15813388.4 / 3 234 007**

(73) Proprietor: **SABIC Global Technologies B.V.**
**4612 PX Bergen op Zoom (NL)**

(72) Inventors:
• **REMERIE, Klaas**
**6160 GA Geleen (NL)**
• **STEENBAKKERS-MENTING, Henrica Norberta Alberta Maria**
**6160 GA Geleen (NL)**
• **VAN DER VEN, Maud**
**6160 GA Geleen (NL)**

(74) Representative: **Sabic Intellectual Property Group**
**Sabic Intellectual Property Department**
**P.O. Box 3008**
**6160 GA Geleen (NL)**

(56) References cited:
**EP-A1- 2 072 546      EP-A1- 2 824 142**
**WO-A2-2010/034684**

(52)  Cooperative Patent Classification (CPC): (Cont.)

C-Sets
**C08L 23/12, C08L 23/16, C08K 5/14, C08K 5/0025**

**Description**

The invention is directed to a heterophasic propylene copolymer and the use of the heterophasic propylene copolymer.

Polypropylene is formed by polymerizing propylene with suitable catalysts. Polypropylene properties vary according to molecular weight, method of production, and the copolymers involved. A heterophasic propylene copolymer has at least a two-phase structure, consisting of a propylene-based semi-crystalline matrix and a dispersed elastomer phase, typically an ethylene-propylene rubber (EPR). These polypropylenes are generally prepared in one or more reactors, by polymerization of propylene in the presence of a catalyst system, and subsequent polymerization of a propylene-ethylene mixture; but can also be made by blending different (co)polymers. The advantage of heterophasic propylene copolymers is improved impact resistance, especially at lower temperatures.

Heterophasic propylene copolymers are also known as impact polypropylene.

WO 2014/044680 comprises a process for the preparation of a composition comprising heterophasic propylene copolymer and talc.

US 2014/0088255 discloses a propylene resin material capable of affording molded article superior in impact properties, tensile properties and appearance.

EP 2 083 046 relates to polymer compositions with improved scratch resistance and no or low gloss.

US 2006/0155069 discloses a process for making a thermoplastic polyolefin elastomer.

EP1354901 describes heterophasic propylene polymer compositions comprising 70-95 wt% of a matrix phase comprising a propylene homopolymer and/or a propylene copolymer and 5-30 wt% of a disperse phase comprising an ethylene rubber copolymer, the ethylene rubber copolymer being distributed within the polymer composition in the form of particles. It is described that this heterophasic propylene polymer is characterized by an improved processability as well as an improved balance of mechanical parameters.

WO 2010/034684 discloses a polyolefin composition comprising a propylene homopolymer or copolymer; a copolymer of ethylene with one or more C4-C10 $\alpha$-olefin(s) and a butene-1 (co)polymer. The composition is described to have good impact resistance, excellent whitening resistance and relatively low stiffness combined with good optical properties.

EP2072546 discloses a heterophasic polypropylene resin comprising a polypropylene homo- or copolymer matrix phase and an ethylene-propylene copolymer phase dispersed within the matrix. The composition is described to have excellent impact properties at low temperatures.

There is however a demand to further improve the mechanical properties of the heterophasic propylene copolymers, in particular the balance between the melt flow, the toughness and the stiffness of the heterophasic propylene copolymer.

It is an object of the invention to provide a heterophasic propylene copolymer having improved mechanical properties.

A process for the preparation of the heterophasic propylene copolymer is disclosed, the process comprising mixing a polymer composition comprising 55-95 wt% of a propylene polymer and 5-45 wt% of an ethylene-propylene rubber with 0.01-1 wt% of an organic peroxide with a decomposition half-life time of 6 minutes at a temperature between 80 and 109 °C and 0.001- 1.5 wt% of a co-agent, wherein all weight percentages are based on the total weight of the polymer composition, wherein the mixing is performed at a temperature which is below the temperature where the organic peroxide has a decomposition half-life time of 6 minutes to obtain a mixed polymer composition, and subsequently melt-mixing the mixed polymer composition.

It was surprisingly found that during melt-mixing of the polymer composition with the organic peroxide and the co-agent the melt flow index (MFI) value of the polymer composition remained at an about equal level while the Izod impact raised to a higher value compared with the Izod impact of the polymer composition before melt-mixing. Moreover the amount of crosslinking of the heterophasic propylene copolymer remains very low, giving a low gel content, excellent appearance and absence of surface defects.

An additional advantage of the process is, that stable MFI values can be obtained, which do not depend on slight variations of the process. Moreover the heterophasic propylene copolymer obtained in the process shows an improved brittle to tough transition temperature relative to the (reference) polymer composition that is introduced in the process.

A process for the preparation of the heterophasic propylene copolymer comprising mixing a polymer composition comprising a propylene polymer and an ethylene-propylene rubber with a peroxide and a co-agent and subsequently melt-mixing the mixed polymer composition is disclosed.

The polymer composition comprises a propylene polymer. The propylene polymer can be chosen from a propylene homopolymer and/or a propylene copolymer comprising at least 90 wt% of propylene and up to 10 wt% ethylene and/or at least one $C_4$ to $C_{10}$ alpha-olefin. In a preferred embodiment, the propylene polymer is a propylene homopolymer.

The amount of propylene polymer in the polymer composition is 55-95 wt% based on the total weight of the polymer composition, preferably the amount of propylene polymer is 65-95 wt%, more preferably 70-90 wt%.

The polymer composition also comprises an ethylene-propylene rubber. The ethylene-propylene rubber preferably comprises from 15 to 70 wt% of ethylene and from 30 to 85 wt% of propylene. The ethylene-propylene rubber can also comprise an amount of up to 10 wt% of a $C_4$ to $C_{10}$ alpha-olefin.

The amount of ethylene-propylene rubber in the polymer composition is 5-45 wt% based on the total weight of the polymer composition, preferably the amount of ethylene-propylene rubber is 5-35 wt%, more preferably 10-30 wt%.

The propylene polymer and ethylene-propylene copolymer can be mixed before the disclosed process, for example during a polymerization process or blending process of the two components.

The polymer composition can have a MFI index (Melt Flow Index) between 1 and 50, preferably between 2 and 35, most preferably between 5 and 20. The MFI value is determined according to ISO 1133-1:2011.

In the disclosed process for the preparation of the heterophasic propylene copolymer an organic peroxide is present. The organic peroxide used in the process has a low decomposition half-life temperature. The organic peroxide that is used in the process has a decomposition half-life time of 6 minutes at a temperature between 80 and 109 °C. Preferably, the organic peroxide has a decomposition half-life time of 6 minutes at a temperature between 82 and 105 °C, more preferably between 85 and 100 °C.

Suitable organic peroxides can, for example, be chosen from the group consisting of tert-amyl peroxyneodecanoate, tert-butyl peroxyneodecanoate, 1,1,3,3-tetramethylbutyl peroxypivalate, tert-butyl peroxyneoheptanoate, tert-amyl peroxypivalate, tert-butyl peroxypivalate, di(3,5,5-trimethylhexanoyl) peroxide, dilauroyl peroxide, didecanoyl peroxide, 2,5-dimethyl-2,5-di(2-ethylhexanoylperoxy)hexane, 1,1,3,3-tetramethylbutyl peroxy-2-ethylhexanoate and tert-amyl peroxy-2-ethylhexanoate. Preferably, the organic peroxide has a structure according to formula I

$$R1\text{-}(C\text{=}O)\text{-}O\text{-}O\text{-}(C\text{=}O)\text{-}R2 \qquad (I)$$

wherein R1 and R2 are the same or different and are chosen from alkyl, aryl or aralkyl groups, having between 2 and 30 carbon atoms.

The alkyl, aryl and aralkyl groups can be linear or branched groups.

Examples of R1 or R2 groups are pentyl, hexyl, octyl, phenyl, cyclohexyl, 2-methylhexyl, 2,2-methylhexyl, 8-ethyloctyl, 3,5,5 trimethylhexanoyl, lauroyl, decanoyl or dibenzoyl. Preferably, the R1 and R2 groups contain between 6 and 25, more preferably between 10 and 20 carbon atoms. More preferably, the organic peroxide is chosen from the group consisting of di(3,5,5-trimethylhexanoyl) peroxide, dilauroyl peroxide and didecanoyl peroxide. Most preferably, the organic peroxide is dilauroyl peroxide.

The amount of organic peroxide that is added to the process is 0.01-1 wt% based on the total weight of the polymer composition, preferably the amount of organic peroxide is 0.05-0.9 wt%, more preferably 0.1-0.8 wt%.

In the process for the preparation of the heterophasic propylene copolymer a co-agent is present. A co-agent is herewith defined as a monomeric compound which can be polymerized with the aid of free radicals. Preferably, the co-agent is a bi-functionally or poly-functionally unsaturated compound. 'Bi-functionally unsaturated' as used above means the presence of two polymerizable double bonds in the compound. 'Poly-functionally unsaturated' as used above means the presence of three or more polymerizable double bonds in the compound.

Examples of co-agents are:

- divinyl compounds, such as divinylaniline, ortho-divinylbenzene, para-divinylbenzene, divinylpentane and divinylpropane;
- allyl compounds, such as allyl acrylate, allyl methacrylate, allyl methyl maleate and allyl vinyl ether;
- compounds with two (meth)acrylate groups; and
- dienes, such as 1,3-butadiene, chloroprene, cyclohexadiene, cyclopentadiene, 2,3-dimethylbutadiene, heptadiene, hexadiene, isoprene and 1,4-pentadiene;
- and mixtures of these unsaturated monomers.

Preferably, the co-agent is chosen from the group consisting of 1,3-butadiene, isoprene, 2,3-dimethylbutadiene and ortho- or para-divinylbenzene, more preferably the co-agent is ortho- or para-divinylbenzene.

The amount of co-agent that is added in the process is between 0.001-1.5 wt% based on the total weight of the polymer composition, preferably the amount of co-agent is 0.01-1.2 wt%, more preferably 0.1-1.0 wt%.

The process for the preparation of the heterophasic propylene copolymer comprises mixing a polymer composition comprising the propylene polymer and the ethylene-propylene rubber with the organic peroxide and the co-agent to obtain a mixed polymer composition and subsequently melt-mixing the mixed polymer composition.

Mixing is performed by mixing the polymer composition comprising the propylene polymer, the ethylene-propylene rubber, with the organic peroxide and the co-agent at a temperature which is below the temperature where the organic peroxide has a decomposition half-life time of 6 minutes. Preferably, the temperature during mixing is at least 5 °C below the temperature where the organic peroxide has a decomposition half-life time of 6 minutes, more preferably at least 10 °C below the temperature where the organic peroxide has a decomposition half-life time of 6 minutes. The temperature in the mixing zone can, for example, be between 20 and 104 °C, more preferably between 25 and 99 °C, most preferably between 50 and 95 °C.

Mixing can be performed in any way known to the person skilled in the art. Commonly used mixing devices are a tumbler mixer, a high speed mixer, a jet mixer, a planetary mixer or a Banbury mixer; and blenders, for example V blender, ribbon blender or a cone blender. During mixing the polymer composition can be preheated. Mixing can also be performed in a part of an extruder. Examples of extruders are mono and twin screw extruders.

After mixing the mixed polymer composition is melt-mixed by heating the mixed polymer composition to a temperature above the melting temperature of the propylene polymer.

The melting temperature of the propylene polymer is determined by differential scanning calorimetry according to ISO 11357, wherein heating is performed at a heating rate of 10 °C/min and the melting temperature is taken from the second heating curve. Melt-mixing preferably is performed at a temperature above 160 °C, more preferably at a temperature above 180 °C, most preferably at a temperature above 200 °C. Melt-mixing preferably is performed at a temperature below 300 °C, more preferably at a temperature below 280 °C, most preferably at a temperature below 260 °C.

Preferably, the process is performed in an extruder comprising a mixing zone having a temperature below the temperature where the organic peroxide has a decomposition half-life time of 6 minutes for mixing the propylene polymer, the ethylene-propylene rubber, the organic peroxide and the co-agent, and a subsequent reaction zone having a temperature above the melting temperature of the propylene polymer for melt-mixing the mixed polymer composition.

The present invention relates to a novel heterophasic propylene copolymer. By treatment of the polymer composition comprising 60-92 wt% of a propylene polymer and 8-40 wt% of an ethylene-propylene rubber, with an ethylene content between 15-70wt%, with 0.01-1 wt% of an organic peroxide with a decomposition half life time of 6 minutes at a temperature between 80 and 109 °C and 0.001-1.5 wt% of a co-agent, a new and special heterophasic copolymer has been obtained having a special combination of properties.

The heterophasic propylene copolymer has

    a. Overall ethylene content between 5-20 wt%
    b. MFI between 3 and 25 (g/10 min)
    c. 20 °C xylene soluble fraction (CXS) between 8 and 30 (wt%)
    d. a BTT according to the formula: BTT $\leq$ 65 - 10* (CXS/MFI)

The heterophasic propylene copolymer has an overall ethylene content between 5 and 20 wt%, as measured with IR spectroscopy, which was calibrated using NMR according to known procedures.

Preferably the amount of ethylene ranges between 7 and 17 wt%, relative to the total of the propylene composition.

The MFI ranges between 3 and 25 (g/10 min), as measured in accordance with ISO 1133-1 :2011 at 230 °C with a weight of 2.16 kg. Preferably the MFI ranges between 3.5 and 20 g/10min.

The 20 °C xylene soluble fraction (CXS) ranges between 8 and 30 wt%, and is determined in accordance with ISO 16152. Preferably CXS ranges between 9 and 20, more preferably between 10-18 wt%. Advantage of having these high CXS values is, that crosslinking of the rubber phase of the heterophasic copolymer is absent, or only a low amount of crosslinking occurs. The absence of substantial crosslinking facilitates extrusion and film formation, causes less defects and a higher impact material. Moreover the surface of articles shows less surface defects and is smoother.

The CXS values of the heterophasic polymer according to the invention are much higher than products which have been obtained by reacting polymer compositions with peroxides and coagent which are reactive at higher temperatures. At these higher temperatures, a substantial amount of crosslinking of the rubber phase of the heterophasic copolymer takes place, which decreases the amount of ethylene-propylene copolymers that are soluble in xylene at 25 °C (so lower CXS value).

The heterophasic copolymer according to the invention has a surprisingly low brittle tough temperature (BTT). The BTT is normally influenced by the MFI of a polymer and by the CXS of a polymer. In the present invention, the BTT relation has changed and a lower BTT is obtained at the same CXS and MFI values compared to polymers of the state of the art.

The BTT relation is:

$$BTT \leq 65 - 10* (CXS/MFI) \quad (^{\circ}C)$$

Preferably the following relation of BTT is valid:

$$BTT \leq 60 - 10 * (CXS/MFI) \ (^{\circ}C).$$

A low BTT has the advantage that products show excellent toughening behavior and impact resistance. In combination with the relative high MFI (which is accompanied with excellent flow) the present heterophasic copolymer shows an excellent set of preferred properties.

Preferably the heterophasic propylene copolymer according to the invention has a very low gelcontent. The gelcontent is less than 4 wt%, preferably less than 3 wt%, more preferably less than 2 wt%. The gelcontent is determined by dissolving the heterophasic propylene copolymer in boiling xylene (130 °C), separating the dissolved polymer from solids and recovering the dissolved polymer. The difference between starting amount of heterophasic propylene copolymer and recovered dissolved polymer is the gelcontent of the heterophasic propylene copolymer. In practice the determination of low amounts of gel is difficult. Gelcontent numbers between 0 and 2 wt% correspond to very low amounts of gel, or the absence of any gel.

The invention is further directed to the use of the heterophasic propylene copolymer in garden furniture, household items, battery casings, automobile parts, containers, toys, crates and boxes.

Although the invention has been described in detail for purposes of illustration, it is understood that such detail is solely for that purpose and variations can be made therein by those skilled in the art without departing from the spirit and scope of the invention as defined in the claims.

It is further noted that the invention relates to all possible combinations of features described herein, preferred in particular are those combinations of features that are present in the claims.

It is noted that the term 'comprising' does not exclude the presence of other elements. However, it is also to be understood that a description on a product comprising certain components also discloses a product consisting of these components. Similarly, it is also to be understood that a description on a process comprising certain steps also discloses a process consisting of these steps.

The invention will now be elucidated by way of the following examples without however being limited thereto.

EXAMPLES

Materials

The polymer compositions were all Sabic products: blends of homopolymer of propylene with an ethylene propylene copolymer 'rubber'.

More detailed information regarding the composition of the polymer compositions can be found in table 1.

**Table 1: Propylene copolymers powder mixtures**

|  |  | P1 | P2 | P3 |
|---|---|---|---|---|
| **MFI** | [g/10min] | 1.9 | 5.3 | 14.4 |
| **CXS** | [wt%] | 18 | 12 | 12 |
| **overall C2 content** | [wt %] | 14 | 9 | 9 |
| **BTT** | [°C] | -4 | 40 | 60 |

*Peroxides:*

- Laurox® S, dilauroyl peroxide; decomposition half-life time = 6 min at a temperature of 99 °C (T(°C) for t ½ of 0.1 h).
- Trigonox® BPIC-C75, t-butylperoxy isopropyl carbonate; decomposition half-life time = 6 min at a temperature of 137 °C.
- Luperox® 802PP40, di(t-butylperoxyisopropyl)benzene; decomposition half-life time = 6 min at a temperature of 156 °C.
- Perkadox 14, Di(tert-butylperoxyisopropyl)benzene, T(°C) for t ½ of 0.1 h is 156 °C.
- Trigonox 25, tert butyl peroxy pivalate, T(°C) for t ½ of 0.1 h is 94 °C.

Co-agent: Divinylbenzene (DVB)

*Additives:* Calcium stearate; Irganox® B225

Preparation of the samples

The samples for the experiments were prepared with a standard additive package of 0.1 wt.% calcium stearate and 0.2 wt.% Irganox B225. Various ratios peroxide/co-agent were added to each sample. The additives and heterophasic propylene copolymer powders were pre-mixed and the peroxides and the co-agents were dosed per batch, and homogenized by hand just before the extrusion on a ZSK 25 extruder. All experiments have been performed with the same screw, temperature settings (temperature in the mixing zone was 40 °C and temperature in the melt-mixing zone was 240 °C), a screw speed of 200 rpm and a throughput of 8 kg/hour. In table 2 all the samples which were produced are described.

Test methods

The MFI value was determined according to ISO 1133-1:2011 at 230 $^0$C and 2.16 kg.
The Izod impact was determined according to ISO 180/4A at 23 °C and 3.2 mm or to determine the brittle to tough transition temperature (BTT) at various higher temperatures. The Izod impact was determined parallel (II).
All compounds analyzed were separated in a CXS (< 25 °C) fraction, a CXUS (25 °C - 130 °C) fraction (respectively called the 25C and the 130C fraction), and a gel fraction (non-soluble in hot xylene). The difference between a recovery of 100 wt.% and the observed recovery was taken as an indicative number for gel content.
Table 2 also shows the test results for all samples.

**Table 2: Test Results**

| Experiment | Powder | Peroxide | | DVB | MFI | Impact |
|---|---|---|---|---|---|---|
| | | Type | wt% | wt% | g/10 min | kJ/m$^2$ |
| CE1 | P1 | - | | - | 1,9 | 77 |
| CE2 | P1 | Laurox S | 0.62 | - | 2, 3 | 77 |
| E1 | P1 | Laurox S | 0.62 | 0.22 | 0,6 | 83 |
| E2 | P1 | Laurox S | 0.62 | 0.44 | 1 | 86 |
| CE3 | P1 | Trig.BPIC | 0.36 | - | 6,4 | 56 |
| CE4 | P1 | Trig.BPIC | 0.36 | 0.22 | 0,9 | 57 |
| CE5 | P1 | Trig.BPIC | 0.36 | 0.44 | 0,1 | 20 |
| CE6 | P1 | Luperox 802PP40 | 0.36 | - | 150 | 6 |
| CE7 | P1 | Luperox 802PP40 | 0.36 | 0.22 | 35 | 20 |
| CE8 | P1 | Luperox 802PP40 | 0.36 | 0.44 | 12 | 22 |
| CE11 | P2 | - | | - | 5,3 | 16 |
| CE12 | P2 | Laurox S | 0.62 | - | 6, 8 | 13 |
| E11 | P2 | Laurox S | 0.62 | 0.22 | 4,6 | 19 |
| E12 | P2 | Laurox S | 0.62 | 0.44 | 4, 8 | 36 |
| CE13 | P2 | Trig.BPIC | 0.36 | - | 31 | 10 |
| CE14 | P2 | Trig.BPIC | 0.36 | 0.22 | 4, 8 | 17 |
| CE15 | P2 | Trig.BPIC | 0.36 | 0.44 | 1 | 22 |
| CE16 | P2 | Luperox 802PP40 | 0.36 | - | >150 | 2,4 |
| CE17 | P2 | Luperox 802PP40 | 0.36 | 0.22 | 89 | 10 |
| CE18 | P2 | Luperox 802PP40 | 0.36 | 0.44 | 24 | 11 |

(continued)

| Experiment | Powder | Peroxide | | DVB | MFI | Impact |
|---|---|---|---|---|---|---|
| | | Type | wt% | wt% | g/10 min | kJ/m$^2$ |
| CE21 | P3 | - | | - | 14,4 | 8 |
| CE22 | P3 | Laurox S | 0.62 | - | 17 | 8 |
| E21 | P3 | Laurox S | 0.62 | 0.22 | 15 | 10 |
| E22 | P3 | Laurox S | 0.62 | 0.44 | 14 | 10 |
| CE23 | P3 | Trig.BPIC | 0.36 | | 95 | 8 |
| CE24 | P3 | Trig.BPIC | 0.36 | 0.22 | 12 | 13 |
| CE25 | P3 | Trig.BPIC | 0.36 | 0.44 | 1,8 | 13 |
| CE26 | P3 | Luperox 802PP40 | 0.36 | - | >150 | 1,5 |
| CE27 | P3 | Luperox 802PP40 | 0.36 | 0.22 | >150 | 5,7 |
| CE=comparative experiment<br>E=example | | | | | | |

Table 2 shows the effect of Laurox S in examples E1, E2, E11, E12, E21 and E22, which are examples according to the present invention and the effect of 2 other peroxides in comparative experiments CE3-CE8, CE13-CE18 and CE23-CE27, which comparative experiments are not according to the present invention. Furthermore three different polypropylene (PP) resins were tested.

The first PP-resin (P1) had a high rubber content, and therefore showed already a high Izod impact value at 23 °C. The Izod impact value was 77 kJ/m2. Treatment with other peroxides (Trigonox and Luperox) resulted in either crosslinking (which gave a lower MFI value) or degradation of the polymer (which gave a higher MFI value). At the same time for all comparative samples, the Izod impact values were lower than 77 kJ/m2. When the peroxide and co-agent of the present invention were added, the MFI values could be kept fairly constant and the impact of the polymer increased after the process of the invention. Moreover, the effect of the presence of the co-agent was rather independent from the concentration of co-agent, making the process a stable process.

The other two PP resins (P2 and P3) had a composition which contained a lower amount of rubber and therefore the impact values of the virgin material were 16 and 8 respectively. The difference in impact resistance resulted from the difference in MFI of both starting polymer compositions; a Product with a lower MFI gives a higher impact value.

For comparative experiments CE13-CE15 the use of Trigonox resulted first in an increase of MFI (in the absence of co-agent), but later in a strong decrease of MFI due to crosslinking, accompanied with a decrease of the impact. Moreover, the behaviour of the peroxide reaction was strongly dependent on the exact conditions: with only peroxide, an increase of MFI was shown which was due to polymer degradation, while with co-agent the MFI decreased to 4.8 g/10min, and with more co-agent decreased to 1 g/10min which was due to crosslinking. This means that the process with Trigonox as peroxide was very unstable, and slight changes in the process resulted in different polymers.

Furthermore, even at a significant lower MFI (CE15) the impact resistance obtained by using Trigonox was inferior compared to the impact resistance obtained by using Laurox (E12).

The use of Luperox showed (CE16-18) degradation of the polymer (increase of MFI) and a strong deterioration of the Impact values.

Examples E11-E12 with Laurox S (according to the invention) in combination with the co-agent divinylbenzene show a stable MFI and an increase of the Izod impact. The MFI did not depend very much on the level of coagent used, which made the process very stable.

Similar unstable MFI results were obtained for polymer P3 in comparative experiments C23 to C25 and stable MFI's for example E21-E22

The brittle to tough transition temperatures (BTT) were determined for the polymers resulting from examples E11, E12, E21 and E22 with the combination of Laurox S and divinylbenzene as co-agent.

The values of the BTT in parallel direction were compared (see table 3).

**Table 3. Brittle to Tough transition Temperatures (BTT)**

| Experiment | Polymer composition | peroxide | T1/2 0.1h | DVB | MFI | BTT | CXS | Gel wt% |
|---|---|---|---|---|---|---|---|---|
| CE11 | P2 | N | | N | 5.3 | 40 | 12 | 0 |
| CE12 | P2 | Laurox S | 99 | N | 6.8 | 40 | 12 | 0 |
| E11 | P2 | Laurox S | 99 | Y | 4.6 | 30 | 12 | |
| E12 | P2 | Laurox S | 99 | Y | 4.8 | 20 | 11 | 2 |
| CE21 | P3 | N | | N | 14.4 | 60 | 12 | |
| CE22 | P3 | Laurox S | 99 | N | 17 | 60 | 12 | |
| E21 | P3 | Laurox S | 99 | Y | 15 | 38 | 12 | |
| E22 | P3 | Laurox S | 99 | Y | 14 | 38 | 11 | |
| CE31 | P2 | Perkadox 14 | 156 | N | | | 11 | 4 |
| CE32 | P2 | Perkadox 14 | 156 | Y | | | 2 | 9 |
| CE33 | P2 | Trigonox BPIC | 137 | N | | | 10 | 3 |
| CE34 | P2 | Trigonox BPIC | 137 | Y | | | 2 | 10 |
| E31 | P2 | Trigonox 25 | 94 | N | | | 13 | 0 |
| E32 | P2 | Trigonox 25 | 94 | Y | | | 8 | 3 |

Table 3 shows that the brittle to tough transitions of the polymer compositions prepared in the disclosed process with Laurox S and divinylbenzene have been lowered, which is an improved result compared to the reference polymer compositions.

In case CE11 where no Laurox S and no DVB is used, the BTT is 40 $^0$C. With the use of both Laurox S and DVB, the BTT drops to 30 $^0$C (0.22 wt% DVB) and 20 $^0$C with 0.44 wt% DVB, while the impact increases to 19 and 36 kJ/mm2 respectively.

The effect of BTT decrease is even stronger at higher MFI levels. In CE21 with or without peroxide, but absent any accelerator, the BTT is 60 $^0$C. By using a small amount of DVB (0.22 and 0.44 wt%) the BTT drops to 38 $^0$C.

The amount of gel produced during the process in combination with an accelerator also clearly gives an increase of the amount of gel being formed. When a peroxide is used having a decomposition half life time of 6 minutes (0.1 h) at a temperature below 109 celc, low levels of gels are obtained, especially in case Laurox S is being used.

**Claims**

1. A heterophasic propylene copolymer having

    a. Overall ethylene content between 5-20 wt% measured with FTIR
    b. MFI between 3 and 25 (g/10 min) measured according to ISO 1133-1:2011 at 230 $^0$C and 2.16 kg,
    c. 20 °C xylene soluble fraction (CXS) between 8 and 30 (wt%), wherein the CXS is determined according to ISO 16152,
    d. a BTT according to the formula: BTT $\leq$ 65 - 10* (CXS/MFI), wherein the BTT is determined according to ISO 180/4A.

    wherein the wt% is defined relative to the total of the composition.

2. The copolymer according to claim 1, wherein the copolymer has a gelcontent below 4 wt%.

3. The copolymer according to claim 2, wherein the gelcontent is less than 3 wt%, preferably less than 2 wt%.

4. The copolymer according to any one of claims 1-3, wherein the overall ethylene content ranges between 7 and 17 wt%.

5. The copolymer according to any one of the preceding claims, wherein the CXS is between 9 and 20 wt%, preferably between 10 and 18 wt%.

6. The copolymer according to any one of the preceding claims, wherein the MFI is between 3.5 and 20 (g/10 min).

7. The copolymer according to any one of the preceding claims, wherein the BTT is according to the formula: BTT ≤ 60 - 10* (CXS/MFI).

8. Use of the heterophasic propylene copolymer according to any one of claims 1-7 in garden furniture, household items, battery casings, automobile parts, containers, toys, crates and boxes.

**Patentansprüche**

1. Heterophasisches Propylencopolymer mit

   a. einem Gesamtethylengehalt zwischen 5 und 20 Gew.-%, gemessen mit FTIR
   b. einem MFI zwischen 3 und 25 (g/10 min), gemessen nach ISO 1133-1:2011 bei 230 °C und 2,16 kg,
   c. einem bei 20 °C xylollöslichen Anteil (CXS) zwischen 8 und 30 (Gew.-%), wobei der CXS gemäß ISO 16152 bestimmt wird,
   d. einer BTT nach der Formel: BTT ≤ 65-10* (CXS/MFI), wobei die BTT nach ISO 180/4A bestimmt wird,

   wobei die Gew.-% relativ zur Gesamtmenge der Zusammensetzung definiert sind.

2. Copolymer nach Anspruch 1, wobei das Copolymer einen Gelgehalt unter 4 Gew.-% aufweist.

3. Copolymer nach Anspruch 2, wobei der Gelgehalt weniger als 3 Gew.-%, vorzugsweise weniger als 2 Gew.-%, beträgt.

4. Copolymer nach einem der Ansprüche 1-3, wobei der Gesamtethylengehalt zwischen 7 und 17 Gew.-% liegt.

5. Copolymer nach einem der vorhergehenden Ansprüche, wobei der CXS zwischen 9 und 20 Gew.-%, vorzugsweise zwischen 10 und 18 Gew.-%, liegt.

6. Copolymer nach einem der vorhergehenden Ansprüche, wobei der MFI zwischen 3,5 und 20 (g/10 min) liegt.

7. Copolymer nach einem der vorhergehenden Ansprüche, wobei die BTT der folgenden Formel entspricht: BTT ≤ 60-10* (CXS/MFI).

8. Verwendung des heterophasischen Propylencopolymers nach einem der Ansprüche 1-7 in Gartenmöbeln, Haushaltsgegenständen, Batteriegehäusen, Automobilteilen, Behältern, Spielzeug, Kästen und Kisten.

**Revendications**

1. Copolymère de propylène hétérophasique ayant

   a. une teneur globale en éthylène comprise entre 5 et 20% en poids mesurée avec FTIR
   b. un MFI compris entre 3 et 25 (g/10 min) mesuré selon la norme ISO 1133-1:2011 à 230°C et 2,16 kg,
   c. une fraction soluble dans le xylène (CXS) à 20°C comprise entre 8 et 30 (% en poids), où la CXS est déterminée selon la norme ISO 16152,
   d. une BTT selon la formule : BTT ≤ 65-10* (CXS/MFI), où la BTT est déterminée selon la norme ISO 180/4A.

   dans lequel le % en poids est défini par rapport au total de la composition.

2. Copolymère selon la revendication 1, dans lequel le copolymère a une teneur en gel inférieure à 4% en poids.

3. Copolymère selon la revendication 2, dans lequel la teneur en gel est inférieure à 3% en poids, de préférence inférieure à 2% en poids.

4. Copolymère selon l'une quelconque des revendications 1 à 3, dans lequel la teneur globale en éthylène se trouve dans la plage comprise entre 7 et 17% en poids.

5. Copolymère selon l'une quelconque des revendications précédentes, dans lequel la CXS est comprise entre 9 et 20% en poids, de préférence entre 10 et 18% en poids.

6. Copolymère selon l'une quelconque des revendications précédentes, dans lequel le MFI est compris entre 3,5 et 20 (g/10 min).

7. Copolymère selon l'une quelconque des revendications précédentes, dans lequel la BTT répond à la formule : BTT $\leq$ 60-10* (CXS/MFI).

8. Utilisation du copolymère de propylène hétérophasique selon l'une quelconque des revendications 1 à 7 dans les meubles de jardin, les articles ménagers, les boîtiers de batteries, les pièces automobiles, les conteneurs, les jouets, les caisses et les boîtes.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014044680 A
- US 20140088255 A
- EP 2083046 A
- US 20060155069 A
- EP 1354901 A
- WO 2010034684 A
- EP 2072546 A